# EUROPEAN PATENT APPLICATION

(11) **EP 2 680 242 A1**
(43) Date of publication of application: **01.01.2014**
(21) Application number: 12173640.9
(22) Date of filing: 26.06.2012
(51) Int. Cl.: G07F 17/00, A21B 1/00, B65B 69/00, B65G 59/06, B65D 5/00, B65D 5/54, B65D 85/36

(54) **Pizza box, pizza storage system, opening mechanism and a pizza oven for a pizza machine**

(71) Applicant: Pizza Box Incorporated AG, 9470 Buchs (CH)
(72) Inventor: Bonomi, John, 5000 Adelaide (AU); Bonomi, Nicola, 9476 Weite (CH)
(74) Representative: Hepp Wenger Ryffel AG

(57) **Abstract**

A pizza machine comprises a storage system with a separation mechanism and a door, an opening mechanism for a pizza box, and pizza oven. The pizza box (1) for containing pizza comprises a top wall (2) and a bottom wall (3) being connected by at least four side walls (4). At least two of the four side walls (4) are at least partially inclined walls (5), wherein the two inclined walls (5) are located opposite of each other and comprise an inclination angle (A) between bottom wall (3) and inclined wall (5) of substantially less that 90°C, preferably substantially 80°, particularly preferably substantially 70°.

## Description

The invention is directed to a pizza box for containing pizza, a pizza storage system, an opening mechanism for opening a pizza box, a pizza oven, a method for preparing a pizza and a pizza machine.

Automatic vending machines for food articles are known from the prior art.

WO 2009/091593 discloses a hot food vending machine for prepackaged food articles. The food articles are kept frozen or refrigerated and are transferred to a microwave cooking unit on the order of a user. The use of microwave cooking leads to soft food articles and prohibits development of a crunchy or crispy surface of a food article.

WO 2008/103907 discloses an automated pizza preparation and vending system. The pizza is prepared from fresh ingredients directly in the machine. This leads to a high need for cleaning every single container of fresh ingredients and a regular need for servicing the machine due to the expiry of the single ingredients.

It is an object of the present invention to eliminate these drawbacks of the prior art and in particular to provide a pizza machine, which prepares a pizza as fast as possible, wherein the pizza machine is easy to handle and does not need everyday service.

The object is achieved by a pizza box for containing a pizza according to claim 1, a pizza storage system according to claim 6, a pizza storage system according to claim 9, an opening mechanism according to claim 11, a pizza oven according to claim 12, a method for preparing a pizza according to claim 15 and a pizza machine according to claim 16.

According to a first aspect of the invention there is provided a pizza box for containing pizza comprising a top wall and a bottom wall being connected by at least four side walls. At least two of the four side walls are at least partially inclined walls. The two inclined walls are located opposite of each other and comprise an inclination angle between the bottom wall and the inclined wall of substantially less than 90°C. Preferably, the inclination angle approximates to less than substantially 80°C, particularly preferably to less than substantially 70°C.

Preferably, the minimum inclination angle is substantially 45°.

An at least partially inclined wall can be completely inclined or inclined at one or more different sections.

A pizza box with two inclined walls is easily separateable from other pizza boxes when being stacked onto each other. This enables an easy automation in limited space of the separation of one pizza box from the other pizza boxes.

The pizza box can have at least one openable grip area, which can be located on a frangible connecting edge between top wall and at least one side wall. The openable grip area is designed such that the at least one side wall, preferably a non-inclined wall, is openable. The opening of sidewalls is preferred during handling of the pizza box in a machine, e.g. for unpacking the pizza for subsequent preparation in an oven.

An openable grip area is an area which is designed such that a side wall of the pizza box can be gripped either manually or by a gripping mechanism and opened in a pre-determined manner. The grip area can have any kind of shape for example circular, elliptical or multiangular. The edges of the openable grip area are preferably frangible, for example by a perforation.

A pizza box with an openable grip area enables the formation of a defined opening of a pizza box, which eases the automation of the pizza preparation process.

At least one side wall of the pizza box can be openable.

An openable side wall enables an easy taking out and insertion of the pizza into the box.

The at least one side wall comprising the openable grip area can have at least one lateral end area being located at the connection to a second side wall. The lateral end area can be foldable into the inner volume of the pizza box. The folding angle of the lateral end area is preferably substantially 45°.

Substantially 45° comprises an angle of 20° to 50°.

The lateral end area of a side wall may comprise a pre-determined folding line, whereas the connecting edges to the other side wall and the top and bottom wall are frangible. Preferably, the at least one side wall comprises two lateral end areas.

Lateral end areas of a side wall which are foldable into the inner volume of the pizza box enable a holding or a fixation of the pizza inside the pizza box, especially when taking the pizza box out of the pizza machine.

The top wall can comprise a frangible line to enable opening of the pizza box, wherein the frangible line preferably is a perforation of the edges of the top wall.

A frangible line on the top wall eases the opening of the pizza box for the user. Furthermore, the user can eat the pizza with cutlery directly out of the box, when the top wall is the removed.

The pizza box can contain a pizza.

The pizza box is preferably made from carton.

According to another aspect of the invention there is provided a pizza storage system which comprises at least one storage compartment for receiving pizza boxes and a separation mechanism for separating one pizza box from the other pizza boxes for subsequent delivery. The pizza boxes in the storage compartment are stacked onto each other. The lowest pizza box is separatable by the separation mechanism such that none of the remaining pizza boxes has contact to the lowest pizza box.

Stacking of the pizza boxes onto each other means that there is no distance element between the boxes but that the boxes are stacked directly onto each other. The storage compartment sides only serve as guiding edges to ensure that the boxes are correctly stacked onto each other.

The separation mechanism can comprise at least two holding elements, an upper and a lower holding element. The holding elements are separated from each other substantially at the distance corresponding to a height of a pizza box, usually substantially from 2cm to 5cm.

Each of the holding elements can comprise several parts to ensure a save fixation of the pizza box in the position desired. The upper holding element holds the stack of pizza boxes during the separation of the lowest pizza box. The lower holding element holds the complete stack of pizza boxes.

Two holding elements designed such that they are separated from each other substantially at a distance corresponding to a height of a pizza box lead to a possibility to separate the lowest pizza box from the stack of pizza boxes in a mechanically easy and reliable way.

The holding elements can be moveable between a holding position and a releasing position. Preferably, the holding elements are rotatable around the common rotation axis. The pizza boxes, except the lowest pizza box, can be keepable by the upper holding element in the releasing position and all pizza boxes are keepable by the lower holding element in the holding position.

Such a design allows for an easy and space saving design for keeping the pizza boxes and releasing the pizza box when needed.

As a matter of course the above mentioned invention is advantageous on its own. Even more advantageous is of course a combination of the above mentioned application with the other features mentioned throughout this application.

According to another aspect of the invention, there is provided a pizza storage system having a storage compartment closed by a door for a pizza storage system. The pizza storage system comprises at least two guiding elements on opposing sides of the door and at least one actor. The door is moveable by means of the at least one actor at least in two dimensions; A first dimension normal to an opening plane and a second dimension coplanar to the opening plane of the door. In particular, the pizza storage system further comprises the feature as described above.

As a matter of course the above mentioned invention is advantageous on its own. Even more advantageous is of course a combination of the above mentioned application with the other features mentioned throughout this application.

This design enables a safe sealing of the opening by the door when the door is closed. When opening the door, the contact face between door and opening, which preferably comprises a sealing, is treated with care by avoiding friction. This prolongs the lifetime of the door.

The movement in the first dimension and the second dimension can be combined into one combined movement having two components.

This enables a simple and reliable design of the door opening mechanism which leads to a higher service time of the pizza storage system.

The pizza storage system can be designed modularly and hence can be substituted as a whole for cleaning or service purposes. Furthermore, the pizza storage can be suitable for connecting to a cooling unit, which preferably cools the pizza storage system to maximum minus 20°C, preferably maximum minus 10°C and in particular preferably to maximum minus 5°C.

Maximum temperature in this context means the highest temperature allowed.

According to another aspect of the invention there is provided an opening mechanism for opening a pizza box as described above. The opening mechanism comprises a grip element for impressing the openable grip area of a pizza box and for gripping the side wall. The grip element is rotatable around an opening axis. In a receiving position of the pizza box, the opening mechanism comprises a receiving line for receiving the connection line between the bottom wall and the side wall of the pizza box. The opening axis is located substantially at the receiving line.

Such an opening mechanism allows for an easy and automatic opening of a pizza box.

As a matter of course the above mentioned invention is advantageous on its own. Even more advantageous is of course a combination of the above mentioned application with the other features mentioned throughout this application.

The opening mechanism can further comprise a transport unit for transporting a pizza box from a storage system to the opening mechanism.

The grip element can be moveable in a direction normal to the bottom wall of a pizza box additionally to a rotational movement. This enables the opening of openable grip areas of a pizza box.

The grip element can further be rotated along a pre-defined way by an actor. This enables the opening of a pizza box.

The opening mechanism can further comprise folding means for folding foldable end areas of a pizza box into the inner volume of a pizza box.

Folding means enable a fixation of a pizza in a box when the box is tilted.

After opening the pizza box the pizza can be automatically transferred to an oven.

According to another aspect of the invention there is provided a pizza oven for preparation of pizza comprising at least one heating element and at least one of an air circulation element and a steam injecting element. The steam injecting element is adapted to inject steam into a space of the pizza oven at least once during the preparation of a pizza. The air circulation element comprises an air guiding element for guiding hot air onto a focus area.

The focus area preferably comprises the middle of the pizza.

Both the steam injecting element and the air circulation element lead to a faster preparation of a pizza.

As a matter of course the above mentioned invention is advantageous on its own. Even more advantageous is of course a combination of the above mentioned application with the other features mentioned throughout this application.

The injected steam is preferably overheated steam at about 200°C. The steam can be injected during the first third of the preparation time of the pizza to accelerate the defrosting.

The air temperature in the pizza oven can be at maximum 600°C.

Temperatures above 600°C lead to a burning of the pizza.

The temperature in the pizza oven can be at minimum 200°C. Temperatures under 200°C lead to longer preparation times.

The pizza oven can comprise a bottom part for carrying the pizza, wherein the bottom part comprises a radiation heating element.

A radiation heating element in the bottom part further accelerates the preparation of the pizza.

Furthermore, the bottom part can comprise a grid to ensure the pizza keeps a certain distance to the radiation heating element and does not burn.

The pizza oven can be openable by abating the bottom part relative to a top part.

As a matter of course, the top part can be moveable relative to a fixed bottom part.

This design ensures to keep as much heat within the oven as possible during introducing the pizza and taking out the pizza from the oven.

There is further provided a method for preparing a pizza in a pizza machine comprising a pizza storage system containing frozen pizzas, an opening mechanism for opening a pizza box, and a pizza oven. The pizza storage system, opening mechanism and pizza oven contained in the pizza machine are preferably designed as described above. Within the method the following steps are conducted:
- Taking a frozen pizza from the storage system;
- Optionally directly delivering a frozen pizza to the customer;
- Opening the pizza box by means of the opening mechanism;
- Transferring the pizza into the oven;
- Heating the pizza, wherein steam is injected into the oven during heating;
- Transferring the prepared pizza out of the pizza machine to the customer.

The storage system preferably has a temperature of maximum minus 20°C, preferably minus 10°C and in particular preferably minus 5°C. This ensures the pizza staying fresh.

The oven can have a temperature of maximum 600°C and at least 200°C. This ensures a fast preparation of a pizza and the customer does not have to wait too long.

The steam which is injected into the oven can be overheated steam. The overheated steam can have a minimum temperature of 100°C, preferably substantially 200°C.

This ensures that the injection of steam does not cool down the oven in a way that influences the preparation time negatively. The prepared pizza can be re-transferred into the pizza box and transferred to the customer in the pizza box. Additionally, cutlery can be added to ease the eating of the pizza for the customer.

The cutlery is preferably delivered in a separate cutlery box in a section above a pizza dispensing opening in the pizza machine.

As a matter of course the above mentioned invention is advantageous on its own. Even more advantageous is of course a combination of the above mentioned application with the other features mentioned throughout this application.

According to the invention there is further provided the pizza machine comprising at least one of the pizza box as described above and the pizza storage system as described above and the opening mechanism as described above and the pizza oven as described above.

This pizza machine enables a save, fast and easy preparation of a pizza in an automatic system. The service time is reduced due to the reliable mechanical design.

The steps conducted within the pizza machine are as follows: Preparation of machine
- A freezer compartment is filled with pizzas in pizza boxes by a service person
- The temperature of the freezer compartment is kept below - 5°C

Working steps of the machine
- A customer orders a pizza either cooked or frozen.
- A pizza in a pizza box is released from the storage compartment onto a transfer unit.
- In case the pizza is ordered frozen the pizza in the pizza box is directly transferred to the customer.
- The transfer unit transfers the pizza to an opening mechanism
- The opening mechanism opens the pizza box by impressing openable grip areas and opening the pizza box along frangible lines of the pizza box.
- The pizza is transferred to an oven, by a second transport unit.
- The pizza is baked in the oven for 60-120 sec.
- The pizza is taken from the oven by the second transport unit and retransferred to the pizza box.
- The pizza is secured inside the pizza box by folding foldable end areas of the side wall having been opened before into the inner volume of the pizza box.
- The pizza in its pizza box is transferred to the customer.
- A cutlery box is added to the pizza box delivery in a section above the pizza delivery opening.

In the following the invention is described in embodiments by means of figures.
- Figure 1: A perspective view of a pizza box;
- Figure 2: A perspective view of an opening mechanism;
- Figure 3: A second perspective of the opening mechanism;
- Figure 4: A perspective view of the opening mechanism without an actor;
- Figure 5: A perspective view of a pizza storage system;
- Figure 6: A perspective view of a separation mechanism in a holding position;
- Figure 7: A perspective of a separation mechanism in a releasing position;
- Figure 8: A perspective detailed view of two separations mechanisms in two different positions;
- Figure 9: A top view of a door for a pizza storage system;
- Figure 10: A perspective side view of the door for a pizza storage system;
- Figure 11: A sectional view of an oven
- Figure 12: A front view of a pizza machine

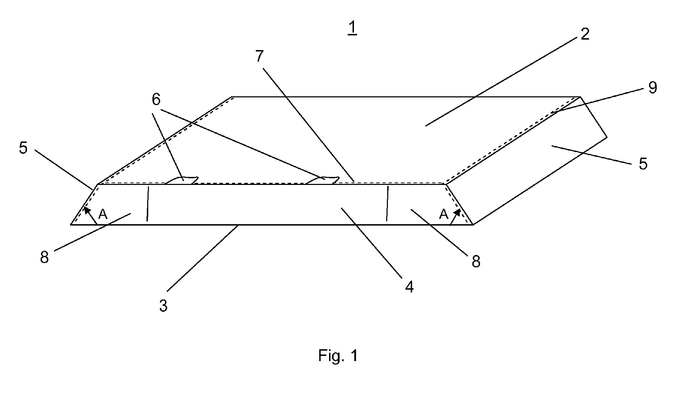

Figure 1 shows a pizza box 1 comprising a top wall 2 and a bottom wall 3. The bottom wall 3 and the top wall 2 are connected by four side walls 4,5. Two of the four side walls are inclined walls 5. The inclined walls 5 have an inclination angle A between bottom wall 3 and inclined wall 5 of substantially 75°. The top wall 2 comprises two openable grip areas which are connected to one side wall 4, which is not inclined. The edge between top wall 2 and non-inclined side wall 4 comprising the openable grip area 6 further comprises a frangible connecting line 7 to enable opening of the pizza box. The frangible connecting line is further continued down the inclination between side wall 4 and inclined wall 5. The side wall 4 comprising the openable grip area 6 further comprises two lateral end areas 8, which can be folded into the inner volume of the pizza box after opening and folding down the side wall 4 and re-introducing the pizza into the box. This way the pizza stays inside the box even if the box is lifted or tilted. The pizza box is made from carton.

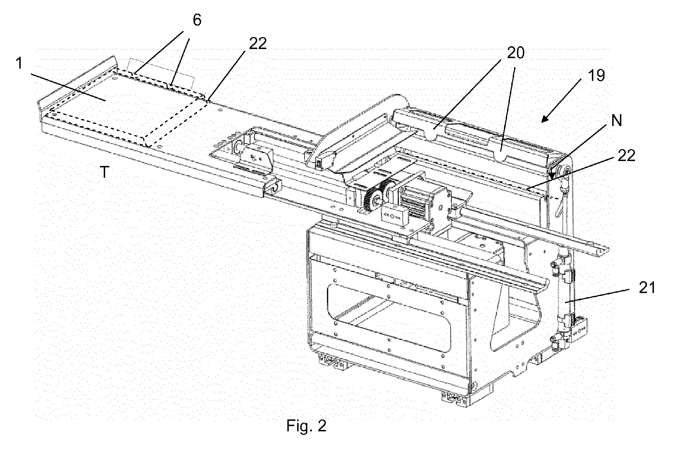

Figure 2 shows an opening mechanism 19. The opening mechanism 19 comprises two grip elements 20 that are able to engage with an openable grip area of a pizza box. The grip elements 20 are moveable by actor 21. The grip elements 20 are first moved in a first direction N normal to the top wall of the pizza box into the openable grip area. After opening the openable grip areas the grip elements are rotated around a receiving line 22. Receiving line 22 substantially corresponds to the connection line between side wall and bottom wall of the pizza box when a box is inserted into the unit comprising the opening mechanism. The transport unit 33 is positioned under a stack of pizza boxes 1 and when one pizza box 1 is released onto the transport unit 33 in a transport position T it transports the pizza box to the opening mechanism 19. The openable grip areas of the pizza box 1 are oriented such that the opening mechanism is able to grip them.

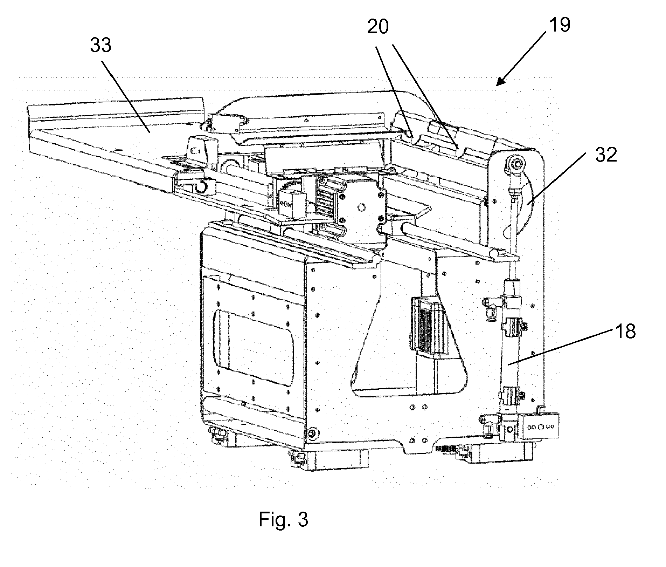

Figure 3 shows a perspective side view of the opening mechanism 19. The device comprising the grip elements 20 is guided by guide rail 32. A pneumatic actor 18 initiates a movement of the grip elements for opening the pizza box. The embodiment further comprises a transport unit 33, which transports the pizza in its pizza box from the storage system to the opening mechanism 19.

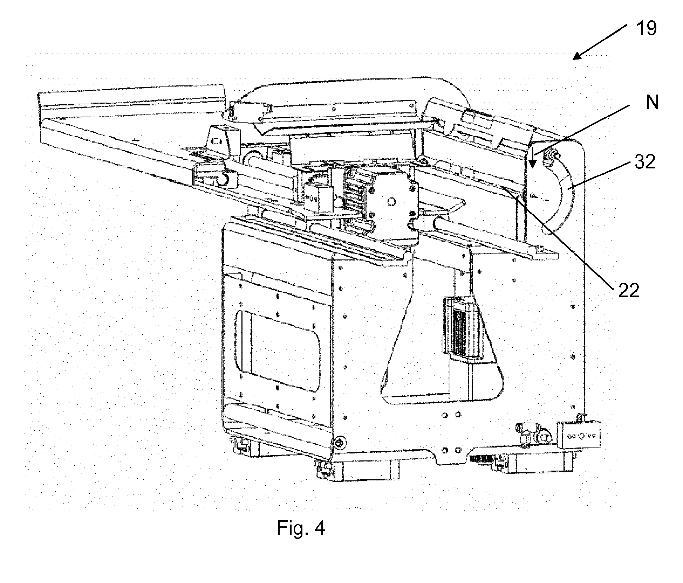

Figure 4 shows the opening mechanism 19 from figure 3 without the actor 18. The guide rail 32 first only comprises a downward movement in a direction N to engage with the openable grip area and then a rotation movement around receiving line 22 to open the side wall of the pizza box completely.

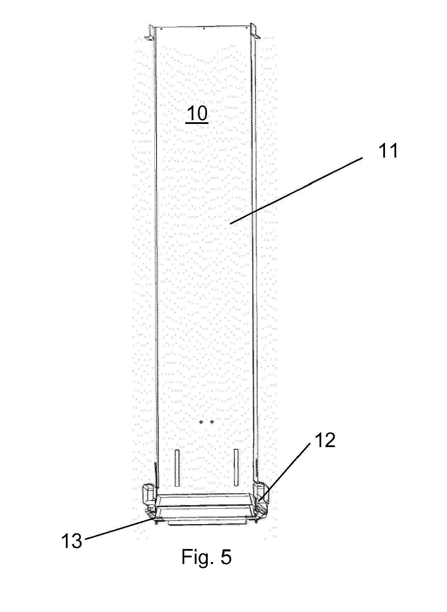

Figure 5 shows a pizza storage system 10 comprising a storage compartment 11 and a separation mechanism 12. Within the storage compartment 11 pizza boxes with pizzas inside are stacked onto each other without any holding elements in between. The lowest pizza box 13 is releasable by separation mechanism 12. The pizza storage system 10 is cooled down to minus 9°C. Hence, the pizzas stay fresh for a long time. Furthermore, the pizza storage system 10 is a module that can be inserted and detached from a pizza machine as a hole. The pizza storage system 10 is connectable to an electric source by electric coupling means.

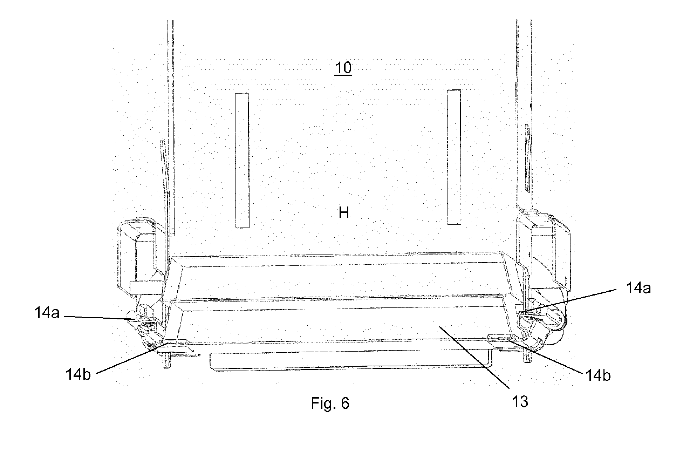

Figure 6 shows a detail of the pizza storage system 10 (see figure 5) in a holding position H. Two pizza boxes are stacked onto each other within the pizza storage system 10. The stack of pizza boxes is held by a lower holding element 14b, which grips under the lowest pizza box 13. An upper holding element 14a does not hold any pizza boxes in this holding position. The holding elements 14 are rotatable around a common axis B. To be able to grip the stock of pizza boxes while releasing the lowest pizza box 13 the importance of the shape of the pizza box with its inclined walls becomes obvious: The upper holding element 14a needs the space between the two pizza boxes to be able to grip under the stack of pizza boxes. Hence, the inclined wall of the pizza box is necessary for the system to function properly.

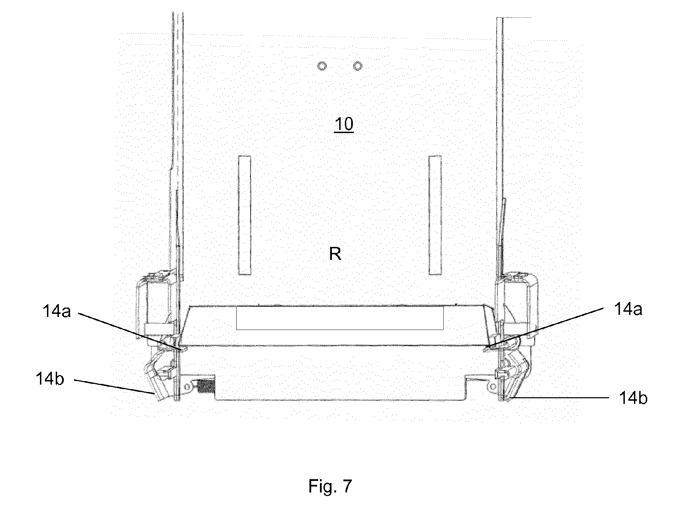

Figure 7 shows a detail of the pizza storage system 10 (see figure 5) in a releasing position R. The upper holding elements 14a keep the stack of pizza boxes, while the lowest pizza box 13 (see Fig. 6) has been released. After the release of the lowest pizza box the complete stack is let down to be held by the lower holding elements 14b (as shown in Fig. 6).

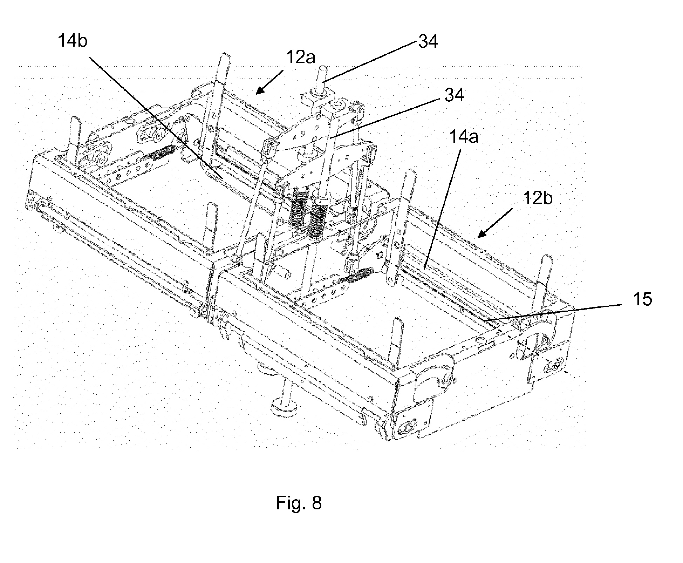

Figure 8 shows a perspective view of two separation mechanisms 12a, 12b beside each other. The separation mechanism 12a is in a holding position, where the lower holding element 14b carries the pizza boxes (not shown). The separation mechanism 12b is in a releasing position where the lowest pizza box 13 (not shown) is released from the pizza storage system. The remaining pizza boxes are kept by upper holding element 14a. The holding elements 14a, 14b are rotatable around common rotations axis 15.

The movement of the holding elements 14 is initiated by actors 34. The actors are designed in a simple, mechanical way due to the cold environment, i.e. the temperature of minus 20°C.

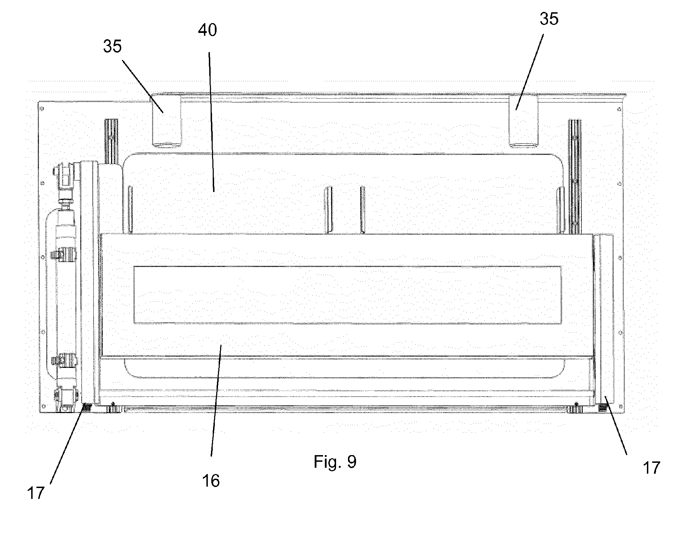

Figure 9 shows a door 16 for closing an opening 40 of a pizza storage system 10 (see figure 5) in its door frame. The door is guided by guiding elements 17 to prevent canting. The pizza storage system 10 (see figure 5) further comprises blocks 35 to stop the door at 16 in an end position. For closing the door the door moves upward.

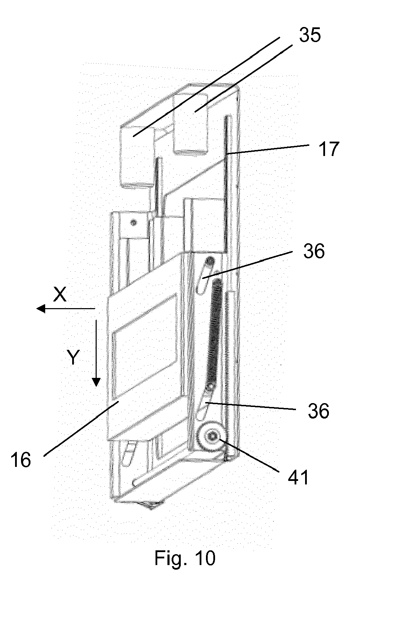

Figure 10 shows a perspective side view of the door of figure 9.

The guiding system 17 in form of a pinion 41 and a rack ensures the transmission of the movement to the door 16. The door 16 is moveable in a combined direction being composed from a direction normal X to the opening plane and a direction along the opening plane Y by guide rail 36. The movement of the door 16 is stopped in an end position by blocks 35. The door 16 is shown in its open position. For opening the door 16 an actor drives pinion 41. While the pinion 41 drives down the rack the door 16 is first only moved in a direction X by means of the guide rail 36.

After reaching the end of the guide rail 36 the door is moved downward together with the pinion 41. The door is finally stopped by blocks 35.

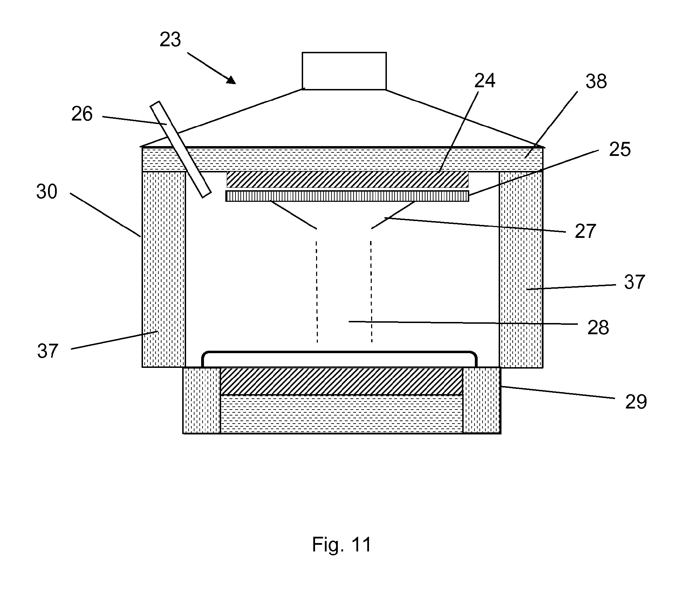

Figure 11 shows a sectional view of a pizza oven 23. The pizza oven 23 comprises a top part 30 and a bottom part 29. The bottom part 29 is abatable to insert and remove a pizza from the oven 23. Both top part 30 and bottom part 29 are insulated. The top part 30 comprises a top insulation 38 and a side insulation 37.

Inside, the oven 23 surrounded by the insulation 37, 38 comprises a heating element 24 an air circulating element 25 and an air guiding element 27. By means of these elements hot air is guided onto a focus area 28 which preferably comprises the coldest part of the pizza to be defrosted and baked. Typically, this is the middle of a pizza. Additionally, the pizza oven 23 comprises a steam injecting element which allows for the injection of steam at about 200°C into the pizza oven 23. This leads to a better thermal conduction inside the oven 23 and leads to a faster preparation time of the pizza.

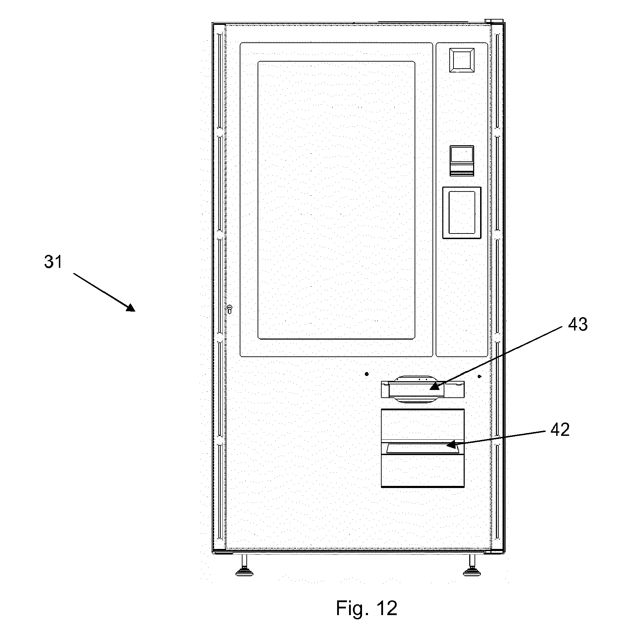

Figure 12 shows a pizza machine 31 comprising at least one of the above mentioned devices, pizza box 1 (see figure1), pizza storage system 10 (see figure 5), separation mechanism 12 (see figures 6-8), door 16 (see figures 9-10), opening mechanism 19 (see figures 2-4), and pizza oven 23 (see figure 11). When a pizza has been ordered by the customer the pizza is delivered through pizza delivery opening 42. Additionally, cutlery is delivered substantially simultaneously through cutlery delivery opening 43.

## Claims

1. A pizza box (1) for containing pizza comprising a top wall (2) and a bottom wall (3) being connected by at least four side walls (4, 5), **characterized in that**, at least two of the four side walls (4) are at least partially inclined walls (5), wherein the two inclined walls (5) are located opposite of each other and comprise an inclination angle (A) between bottom wall (3) and inclined wall (5) of substantially less that 90°, preferably substantially 80°, particularly preferably substantially 70°.

2. A pizza box (1) according to claim 1, **characterized in that**, at least one openable grip area (6) is located on a frangible connecting edge (7) between top wall (2) and at least one side wall (4) such that the at least one side wall (4), preferably a non-inclined wall, is openable.

3. A pizza box according to claim 1, **characterized in that** at least one side wall (4,5) is openable.

4. A pizza box (1) according to claim 2 or 3, **characterized in that** the at least one side wall (4) comprising the openable grip area (6) has at least one lateral end area (8) being located at a connection to a second side wall (4) wherein said lateral end area (8) is foldable into the inner volume of the pizza box (1), preferably by a folding angle of substantially 45°.

5. A pizza box (1) according to any one of the preceding claims, **characterized in that**, the top wall (2) comprises a frangible line (9) to enable opening of the pizza box, preferably a perforation of the edges of the top wall.

6. A pizza box (1) according to any one of the preceding claims containing a pizza.

7. Pizza storage system (10) comprising at least one storage compartment (11) for receiving pizza boxes, preferably according to any one of claims 1 to 6, stacked onto each other and a separation mechanism (12) for separating one pizza box from the other pizza boxes, **characterized in that** the lowest pizza box (13) is separatable by the separation mechanism (12) such that none of the remaining pizza boxes has contact to the lowest pizza box (13).

8. Pizza storage system (10) according to claim 7, **characterized in that** the separation mechanism (12) comprises at least two, an upper (14a) and a lower holding element (14b), being separated from each other substantially at a distance corresponding to a height of a pizza box (1), typically two to five centimeters.

9. Pizza storage system (10) according to claim 8, **characterized in that** the holding elements (14) are movable between a holding position (H) and a releasing position (R), preferably rotatable around a common rotation axis, wherein the pizza boxes (1), except the lowest pizza box (13), are keepable by the upper holding element (14a) in the releasing position and all pizza boxes are keepable by the lower holding element (14b) in a holding position.

10. Pizza storage system (10), in particular a pizza storage according to any one of claims 7 to 9 having a storage compartment (11) closed by a door (16) for a pizza storage system (10) comprising at least two guiding elements (17) on opposing sides of the door (16) and at least one actor (18), **characterized in that** the door (16) is movable by means of the at least one actor (18) at least in two dimensions, a first dimension (X) normal to an opening plane and a second dimension (Y) coplanar to the opening plane.

11. A pizza storage according to claim 10, **characterized in that** the movement in the first dimension (X) and the second dimension (Y) are combined into one combined movement having two components.

12. An opening mechanism (19) for opening a pizza box,preferably according to any one of claims 1 to 6, wherein a grip element (20) for impressing an openable grip area (6) of a pizza box (1) and for gripping a side wall (4) is rotatable around an opening axis (21), wherein, in a receiving position of a pizza box (1), the opening mechanism comprises a receiving line (22) for receiving the connection line between the bottom wall (3) and the side wall (4) of the pizza box, wherein the opening axis (21) is located substantially at the receiving line (22).

13. A pizza oven (23) for preparation of pizza comprising at least one heating element (24) and at least one of an air circulation element (25) and a steam injecting element (26), wherein the steam injecting element (26) is adapted to inject steam into the pizza oven at least once during the preparation of a pizza and the air circulation element (25) comprises an air guiding element (27) for guiding hot air onto a focus area (28).

14. A pizza oven (23) according to claim 13, **characterized in that** it comprises a bottom part (29) for carrying the pizza, wherein the bottom part (29) comprises a radiation heating element.

15. A pizza oven (23) according to any one of claims 12 to 14, **characterized in that** the pizza oven (23) is openable by abating the bottom part (29) relative to a top part (30).

16. A method for preparing a pizza in a pizza machine comprising a pizza storage system containing frozen pizzas, preferably a storage system according to any one of claims 7 to 11, an opening mechanism for opening a pizza box, preferably according to claim 12 and a pizza oven, preferably a pizza oven according to any one of claims 13 to 15, said method comprising the following steps:
- taking a frozen pizza from the storage system;
- opening the pizza box by means of the opening mechanism;
- transferring the pizza into the oven;
- heating the pizza, wherein steam is injected into the oven during heating;
- transferring the prepared pizza out of the pizza machine to the customer.

17. A pizza machine (31) comprising at least one of the pizza box according to claims 1 to 6, the pizza storage system according to claim 7 to 11, the opening mechanism according to claim 11 and a pizza oven according to claims 13 to 15.
